# EUROPÄISCHE PATENTSCHRIFT

(11) **EP 4 071 456 B1**
(45) Veröffentlichungstag und Bekanntmachung des Hinweises auf die Patenterteilung: **04.06.2025**
(21) Anmeldenummer: 22166551.6
(22) Anmeldetag: 04.04.2022
(51) Int. Cl.: G01M 17/007

(54) **DEFORMIERUNGSVORRICHTUNG FÜR KRAFTFAHRZEUGE**
DEFORMATION DEVICE FOR MOTOR VEHICLES
DISPOSITIF DE DÉFORMATION POUR VÉHICULES AUTOMOBILES

(30) Priorität: 09.04.2021 AT 502652021
(43) Veröffentlichungstag der Anmeldung: 12.10.2022
(73) Patentinhaber: WEBER-HYDRAULIK GMBH, 4460 Losenstein (AT)
(72) Erfinder: DIEKMANN, Hanno, 71665 Vaihingen/Enz (DE); HUBER, Johannes, 93107 Thalmassing (DE); HUBER, Siegfried, 93107 Thalmassing (DE); KREUTMAYR, Albert, 86453 Dasing (DE)
(74) Vertreter: Burger, Hannes

(56) Entgegenhaltungen:
- DE-A1- 102012 021 652
- FR-A1- 3 102 555
- KR-A- 20020 032 681
- KR-A- 20040 011 925
- US-A1- 2013 311 126
- US-A1- 2020 240 874

## Beschreibung

Die Erfindung betrifft eine Deformierungsvorrichtung für Kraftfahrzeuge, wie sie in den Ansprüchen angegeben ist. Diese Deformierungsvorrichtung ist zur gezielten Verformung vor allem von Karosserieabschnitten von Personenkraftwagen (PKW) und Lastkraftwagen (LKW) vorgesehen.

Der Anmelder hat das Patent für Frankreich unter Bezugnahme auf FR 3 102 555 A1 freiwillig eingeschränkt und gesonderte Patentansprüche für diesen Staat vorgelegt.

In der DE202005005385U1 ist eine Anlage zur gezielten Verformung eines Übungsfahrzeuges für die technische Hilfeleistung beschrieben. Bei dieser stationären Anlage wird das Fahrzeug auf einer Plattform fixiert und wird daraufhin eine hydraulisch versorgte Arbeitseinheit aus einem oder mehreren hydraulischen Zylindern vom Anwender bzw. von der Hilfsorganisation gezielt gesteuert, um Verformungen in das Fahrzeug einzubringen. Dadurch sollen realitätsnahe Unfallsituationen nachgestellt werden, um eine effektivere Ausbildungen bzw. ein Training für Hilfsorganisationen zu ermöglichen. Gemäß einer Ausführungsform kann die Anlage mobil auf einem Anhänger aufgebaut sein, um standortunabhängig eingesetzt werden zu können. Die Nutzbarkeit und Bedienungsergonomie dieser bekannten Vorrichtung ist jedoch nur bedingt zufriedenstellend.

Die KR 2002 0032681 A beschreibt ein System zum Messen der Stabilität bzw. Verformung der Rückenlehne von Fahrzeugsitzen im Fahrgastraum von neu zu entwickelnden und hinsichtlich ihrer Sicherheit zu testenden Fahrzeugen. Das zu testende Fahrzeug ist mit seil- oder kettenartigen Zugmitteln auf einem Schlitten festgezurrt, welcher Schlitten relativ zu einer am Boden abgestützten Schienenanordnung verschiebbar ist. Das zu testende Fahrzeug weist in seinem Gepäckraum wenigstens ein simuliertes Gepäckstück auf, welches in Zusammenhang mit einem simulierten, stoßartigen Fahrzeugaufprall gegen die Rückseite von wenigstens einer Rückenlehne von zu testenden Fahrzeugsitzen prallt. Für die Simulation eines Fahrzeugaufpralls wird dabei der Kolben eines pneumatisch betätigbaren Zylinders impulsartig gegen die Frontseite des schienengeführten Schlittens gestoßen. Die Karosserie des zu testenden Fahrzeuges bleibt dabei intakt.

Die US 2013/311126 A1 offenbart eine Messvorrichtung zum modellbasierten Ermitteln des Verformungsverhaltens von Fahrzeugteilen, insbesondere von Stoßfängern von Fahrzeugen. Dabei ist ein Tragrahmen vorgesehen, auf welchem ein Halteschlitten verstellbar gelagert ist. Der Halteschlitten ist zur Halterung des Fahrzeugteils ausgebildet und mittels einem Aktuator, beispielsweise einem Hydraulikzylinder, relativ zum Tragrahmen aktiv verstellbar. Das somit relativ zum Tragrahmen aktiv verstellbare Fahrzeugteil wird einem Prallbock angenähert, welcher Prallbock fix mit dem Tragrahmen der Vorrichtung verbunden ist und in seinem dem Halteschlitten zugewandten Abschnitt ein weiteres Fahrzeugteil, insbesondere einen weiteren Stoßfänger, haltert. Mittels Kraft- und Wegsensoren wird dabei das Verformungsverhalten der jeweiligen Fahrzeugteile messtechnisch aufgezeichnet.

Die DE 10 2012 021652 A1 betrifft einen Dichtprüfstand für Fahrzeuge, umfassend einen Prüfraum mit Wassersprühelementen und Gestell. Dabei ist die Karosse des zu prüfenden Fahrzeuges auf einem Schwingungserreger fixiert, der fahrbetriebsähnliche Anregungen erzeugt. Dadurch sollen die Dichtelemente des Fahrzeuges fahrbetriebsähnliche Zustände erreichen und sollen so wirklichkeitsnahe Prüfergebnisse beispielsweise in Zusammenhang mit Wasser-, Luft- und Geräusch-Undichtheiten erzielt werden.

Die US 2020/240874 A1 beschreibt ein transportables Fahrzeuggehäuse zum Transportieren von Fahrzeugen. Das Gehäuse ist dabei als Monoblock ausgebildet, der zum Laden auf einen Transporter und zum Entladen von einem Transporter geeignet ist. Das Gehäuse umfasst Seiten-, Front-, Heck-, Decken- und Bodenabschnitte, wobei einer der Abschnitte konfiguriert ist, um einen Fahrzeugzugang zu ermöglichen, wodurch ein Fahrzeug im Gebrauch innerhalb des Gehäuses platziert werden kann. Das Gehäuse umfasst ferner mehrere Kameras, die in oder auf mehreren der Abschnitte integriert sind, um jede Seite des Fahrzeugs abzubilden, wenn sich ein Fahrzeug in dem Gehäuse befindet.

Die KR 2004 0011925 A offenbart eine Vorrichtung zum Simulieren von Seitenaufprallunfällen von Fahrzeugen. Dabei ist ein zu testendes Fahrzeug auf einer Rollplattform positioniert. Die Rollplattform kann mit einer Ölschicht versehen sein, um rutschige Fahrbahnverhältnisse zu simulieren. Mittels einer Windenanordnung wird die Rollplattform derart auf ein pfeilerartiges Objekt zubewegt, dass das Fahrzeug mit seiner Seitenflanke gegen das pfeilerartige Objekt aufprallt. Diese Simulationsvorrichtung soll die bisher üblichen Verunreinigungen der Testflächen für Fahrzeugtestungen hintan halten.

Aufgabe der vorliegenden Erfindung war es, die Nachteile des Standes der Technik zu überwinden und eine Vorrichtung zur Verfügung zu stellen, mittels derer ein Benutzer in der Lage ist, Fahrzeug-Übungsobjekte für technische Hilfeleistungen auf praktikable und möglichst einfache Art und Weise bereitzustellen.

Diese Aufgabe wird durch eine Deformierungsvorrichtung gemäß den Ansprüchen gelöst.

Die erfindungsgemäße Deformierungsvorrichtung für Kraftfahrzeuge umfasst eine mechanische Tragstruktur mit einer definierten Aufstandsfläche bzw. Abstellebene für ein zu verformendes Kraftfahrzeug, eine steuerbare Kräfteeinleitungsvorrichtung gegenüber dem zu verformenden Kraftfahrzeug, welche Kräfteeinleitungsvorrichtung wenigstens einen Hydraulikzylinder mit wenigstens einer Andrückfläche gegenüber dem zu verformenden Kraftfahrzeug umfasst, und wenigstens ein Fixier- bzw. Haltemittel zum Festlegen des zu verformenden Kraftfahrzeuges relativ zur Aufstandsfläche. Das Haltemittel umfasst wenigstens ein Wi-derlagerelement, welches mit der Tragstruktur lastübertragend bzw. mechanisch fest verbunden bzw. verbindbar ist. Das wenigstens eine Widerlagerelement weist wenigstens eine Abstützfläche vorzugsweise gegenüber Karosserieoberflächen von dem zu deformierenden Kraftfahrzeug auf. Das wenigstens eine Widerlagerelement ist derart ausgebildet bzw. derart schubfest, dass es von der Kräfteeinleitungsvorrichtung aufbringbare Verformungskräfte deformierungsfrei aufnehmen kann. Dies insbesondere dann, wenn ein zu deformierendes Kraftfahrzeug zwischen die Kräfteeinleitungsvorrichtung und dem wenigstens einen Widerlagerelement eingefügt ist.

Eine solche Vorrichtung ist besonders praktikabel, weil ein zu deformierendes Kraftfahrzeug rasch, kontrolliert und zugleich sicher einer gezielten Deformierung unterzogen werden kann. Ein entsprechendes Übungsfahrzeug ist dabei lediglich auf der vorgesehenen Aufstandsebene zu positionieren und kann nachfolgend der Deformierungsvorgang bereits vorgenommen werden. Aufwändige Fixier- bzw. Zurrmaßnahmen am Kraftfahrzeug gegenüber der Aufstandsfläche können erübrigt werden. Dies bringt erhebliche Zeitersparnisse und auch Sicherheitsvorteile, nachdem Zurr- bzw. Spannmittel, wie beispielsweise Seile, Ketten oder Spannbänder, den jeweils wirkenden Kräften und Einflüssen zuverlässig standhalten müssen. Außerdem müssen solche Kraftfahrzeug-Fixiermittel einer regelmäßigen Überprüfung auf Schäden oder Abnutzungen unterzogen werden, was Zeitaufwand und Kosten verursacht. Das den jeweiligen Schubkräften standhaltende, formbeständige Widerlagerelement kann vergleichsweise robust, kostgengünstig und funktionssicher ausgeführt werden. In vorteilhafter Art und Weise erübrigt sich dadurch auch die Suche nach geeigneten bzw. ausreichend stabilen Anschlagpunkten an dem zu verformenden Kraftfahrzeug.

Die Kräfteeinleitungsvorrichtung umfasst zumindest zwei, vorzugweise zumindest drei von einer Bedienperson unabhängig voneinander betätigbare Hydraulikzylinder, deren Stell- bzw. Schubkräfte unter Zwischenschaltung des zu verformenden Kraftfahrzeuges auf das wenigstens eine Widerlagerelement einwirken. Zweckmäßig ist es, wenn die zumindest zwei Hydraulikzylinder in zueinander unterschiedlichen Höhenpositionen angeordnet sind. Damit sind umfassende bzw. variantenreiche Verformungszustände an der Karosserie von Übungsfahrzeugen, insbesondere an dessen Fahrgastzelle, erzielbar. Darüber hinaus ist es durch die selektive Betätigungsmöglichkeit der zumindest zwei Hydraulikzylinder vorteilhafterweise ermöglicht, dass mit einem oder mehreren Hydraulikzylindern eine rasche Festlegung bzw. Verschiebesicherung des zu deformierenden Kraftfahrzeuges aufgebaut wird und mit einem oder mehreren weiteren Hydraulikzylindern der Krafteinleitungsvorrichtung die gewünschte Verformung der jeweiligen Karosserieabschnitte vorgenommen wird. Insbesondere können dadurch unerwünschte Verkippungs- bzw. Ausweichbewegungen des zu verformenden Kraftfahrzeuges effizient hintan gehalten werden.

Die manuelle und selektive Bedienung bzw. Aktivierung der Aus- und Einfahrbewegungen der zumindest zwei Hydraulikzylinder ist bevorzugt ausgehend von einer tragbaren Bedieneinheit ausführbar, welche von der Tragstruktur örtlich abgesetzt positionierbar ist. Hierzu kann diese tragbare Bedieneinheit funktechnisch oder mittels einer Kabelverbindung mit einer Ventileinheit für die zumindest zwei Hydraulikzylinder steuerungstechnisch koppelbar sein. Damit ist eine möglichst personensichere bzw. gefährdungsfreie Deformierung von Kraftfahrzeugen ermöglicht und kann zudem vom Bediener eine jeweils optimale Position eingenommen werden, um die Deformierungsvorgänge gut beobachten und kontrollieren zu können.

Eine solche Fernbedienbarkeit der Deformierungsvorrichtung bzw. deren Kräfteeinleitungsvorrichtung mittels einer mobilen bzw. tragbaren Bedieneinheit ermöglicht eine Steuerung der Kräfteeinleitungsvorrichtung aus gesicherter Distanz. Insbesondere können eventuelle Gefährdungen für die Bedienperson hinsichtlich Glassplitter, scharfkantiger Blechteile oder Gefahrenteile wie Airbag-Gasgeneratoren, Gasdruckdämpfer und dergleichen, vermieden werden.

Entsprechend einer zweckmäßigen Ausgestaltung ist die Tragstruktur der Deformierungsvorrichtung als Käfigstruktur ausgeführt, welche Käfigstruktur einen Schubkräfte aufnehmenden Untergurtabschnitt aufweist und einen in Vertikalrichtung zum Untergurtabschnitt distanzierten, Schubkräfte aufnehmenden Obergurtabschnitt aufweist. Vorteilhaft ist es, wenn der festigkeitsrelevante Untergurtabschnitt und Obergurtabschnitt mehr als 1 m, vorzugsweise mehr als 1,5 m, besonders bevorzugt mehr als 1,8 m in Vertikalrichtung voneinander distanziert angeordnet sind. Damit ist eine mechanisch robuste sowie formstabile, und trotzdem möglichst leichtgewichtige Tragstruktur erzielbar. Die überwiegend auf Zug beanspruchten Strukturelemente bzw. Metallträger können dadurch mit relativ geringen Querschnitten bzw. Wandstärken ausgeführt werden, wodurch neben Gewichtsvorteilen auch Kostenvorteile generiert werden können.

Das wenigstens eine Widerlagerelement kann eine Stützwand und/oder mehrere Stützpfeiler umfassen. Die Stützwand und/oder die Stützpfeiler sind zur unmittelbaren Anlage an außen liegenden Karosserieoberflächen des zu verformenden Kraftfahrzeuges vorgesehen. Sie können aber auch auf zumindest ein Rad bzw. auf zumindest eine Felge des zu deformierenden Kraftfahrzeuges abstützend bzw. verschiebungsfest einwirken. Damit ist eine besonders verschiebungsfeste und betriebssichere Festlegung eines zu deformierenden Fahrzeuges ermöglicht.

Das wenigstens eine Widerlagerelement kann an mehreren Positionen relativ zur Kräfteeinleitungsvorrichtung positionier- und festlegbar ausgeführt sein. Dadurch ist eine verbesserte Variabilität und Anpassbarkeit der Deformierungsvorrichtung an unterschiedliche Größen bzw. an die jeweilige Breiten- oder Längenabmessung von Kraftfahrzeugen erzielbar.

Gemäß einer praktikablen Ausführungsform kann das Haltemittel einen vorzugsweise quaderförmigen Distanzkörper umfassen, welcher Distanzkörper in eine lichte Weite zwischen der wenigstens einen Andrückfläche des wenigstens einen Hydraulikzylinders und dem wenigstens einen Widerlagerelement bedarfsweise einfügbar und daraus wieder entfernbar ist. Dadurch kann in einfacher Art und Weise eine umfassende und zugleich robuste Anpassbarkeit des lichten Abstandes zwischen dem wenigstens einen Hydraulikzylinder der Kräfteeinleitungsvorrichtung und dem wenigstens einen Widerlagerelement geschaffen werden.

Entsprechend einer vorteilhaften Ausgestaltung ist die Deformierungsvorrichtung derart ausgebildet, dass die Aufstandsfläche für ein zu verformendes Kraftfahrzeug in wenigstens einer Richtung ein Gefälle relativ zu einer horizontal ausgerichteten Aufstandsebene der Deformierungsvorrichtung aufweist. Alternativ oder in Kombination dazu kann vorgesehen sein, dass die Aufstandsfläche als Auffangwanne ausgeführt ist und/oder in der Aufstandsfläche wenigstens eine Rinne ausgebildet ist, sodass ein Auffangen und/oder ein gebündeltes Sammeln von aus einem Kraftfahrzeug austretenden Flüssigkeiten ermöglicht ist. Dadurch ist es möglich, aus einem zu deformierenden Kraftfahrzeug gegebenenfalls austretende Flüssigkeiten gesichert und möglichst vollständig aufzunehmen. Beeinträchtigungen der Umwelt können so hintan gehalten werden. Eventuell austretende Flüssigkeiten können rasch und unkompliziert aufgenommen und ordnungsgemäß entsorgt werden. Solche Flüssigkeiten können durch Kühlflüssigkeit, Bremsflüssigkeit, Treibstoffreste oder durch Öle gebildet sein.

Ferner kann es zweckmäßig sein, wenn an dem niveaumäßig tiefsten Punkt der Auffangwanne und/oder der Rinne eine Abflussöffnung für aus einem Kraftfahrzeug ausgetretene Flüssigkeiten ausgebildet ist. Dies ermöglicht eine rasche und saubere Entnahme bzw. Ableitung von zu entsorgenden Flüssigkeiten.

Darüber hinaus kann vorgesehen sein, dass der Abflussöffnung ein Ablasshahn oder ein bedarfsweise anbring- und entfernbarer Stopfen zugeordnet ist, wodurch austretende Flüssigkeiten bei der Deformierungsvorrichtung vorerst gesammelt, gegebenenfalls inspiziert und dann einer ordnungsgemäßen, jeweils adäquaten Entsorgung zugeführt werden können.

Des Weiteren kann vorgesehen sein, dass die Aufstandsfläche für das zu deformierende Kraftfahrzeug Kehricht-dicht ausgebildet ist. Insbesondere ist es zweckmäßig, wenn diese Aufstandsfläche gitterlos ist, insbesondere scherben- und splitterdicht ausgeführt ist. Im Zuge einer Karosserie-Deformierung entstehende Scherben oder Splitter können dadurch möglichst vollständig von der Aufstandsfläche wieder entfernt bzw. aufgekehrt werden. Diese Reinigungs- bzw. Entsorgungstätigkeiten können dabei möglichst rasch und auch mühelos vorgenommen werden. Unerwünschte Verunreinigungen der Umgebung nach einer Einsatzübung können weitestgehend vermieden werden.

Gemäß einer besonderen Ausprägung ist es möglich, dass die Deformierungsvorrichtung bzw. deren Tragstruktur als absetzbarer LKW-Aufbau mit einem Aufziehhaken und wenigstens einer Absetzrolle oder als seil- oder kettenkoppelbarer LKW-Absetzaufbau ausgeführt ist. Durch einen solchen Hakenlift- bzw. Absetz-Aufbau ist es in einfacher Art und Weise ermöglicht, die Deformierungsvorrichtung an unterschiedliche Orte zu verbringen. Zudem ist es dadurch ermöglicht, dass die jeweiligen Einsatzübungen bzw. Trainings an Ort und Stelle vorgenommen werden können. Außerdem ist es dadurch nicht unbedingt erforderlich, das plangemäß deformierte bzw. einen Unfall simulierende Kraftfahrzeug während eines Übungsablaufes von der Deformierungsvorrichtung zu entfernen. Die gegenüber einem Anhänger-Aufbau relativ niedrige Aufbauhöhe eines am Boden abgestellten Hakenlift-Aufbaus ermöglicht außerdem eine realitätsnahe und gefahrlose, weil absturzsichere, Übungsausführung. Andererseits ist es auch möglich, die Deformierungsvorrichtung mitsamt einem verformten Kraftfahrzeug am LKW-Trägerfahrzeug zu belassen bzw. dort wieder aufzusatteln und so als Simulation eines LKW-Unfalles für Rettungsübungen in größerer Höhe zu verwenden.

Entsprechend einer vorteilhaften Maßnahme kann vorgesehen sein, dass die Tragstruktur eine quer zu einer Längsachse des wenigstens einen Hydraulikzylinders verlaufende Breite von maximal etwa 2550 mm aufweist. Dadurch ist es möglich, die Deformierungsvorrichtung als LKW-Aufbau auszuführen und vor allem im europäischen Raum ohne Sondertransport-Erfordernisse unkompliziert an unterschiedliche Orte zu verbringen. Weil die Längsachse des wenigstens einen Hydraulikzylinders in Längsrichtung der Deformierungsvorrichtung verläuft, ist es außerdem möglich, dass der wenigstens eine Hydraulikzylinder eine relativ weitreichende Ausschublänge aufweisen kann.

Weiters kann es vorteilhaft sein, wenn die Tragstruktur eine parallel zu einer Längsachse des wenigstens einen Hydraulikzylinders verlaufende Länge aufweist, welche zwischen 5000 mm und 9000 mm beträgt. Dadurch können bei einer großen Vielfalt von Kraftfahrzeugen verschiedene Aufprallszenarien wie Seiten-, Heck-, Dach- oder Frontalaufprall problemlos simuliert werden. Zudem ist ein einfacher Transport der Deformierungsvorrichtung mittels einem LKW ermöglicht.

Ferner kann vorgesehen sein, dass das wenigstens eine Widerlagerelement an einem in Bezug auf die Transportrichtung des LKW-Aufbaus vorderen Längsende der Tragstruktur ausgebildet ist und der Aufziehhaken am Widerlagerelement befestigt ist. Dadurch ist eine optimierter struktureller Aufbau der Deformierungsvorrichtung geschaffen. Das wenigstens eine mechanisch relativ stabile Widerlagerelement wird zusätzlich dazu genutzt, um die beim Auf- und Absetzen der Deformierungsvorrichtung gegenüber einem Wechsellader-LKW auftretenden Kräfte effizient aufzunehmen.

Darüber hinaus kann vorgesehen sein, dass ein Zylinderboden des wenigstens einen Hydraulikzylinders einem in Bezug auf die Transportrichtung des LKW-Aufbaus hinteren Längsende der Tragstruktur nächstliegend zugeordnet ist. Dadurch kann wenigstens ein Teilabschnitt des Zylindergehäuses des zumindest einen Hydraulikzylinders über das hintere Ende der mechanischen Tragstruktur vorragen, wodurch weiterhin ein problemloser LKW-Transport und eine verbesserte Ausnutzung der verfügbaren Gesamtlänge eines solchen LKW-Aufbaus ermöglicht ist.

Vorteilhaft ist es auch, wenn der wenigstens eine Hydraulikzylinder als Flanschzylinder ausgebildet ist, welcher im Bereich der Kolbenaustrittsseite am Zylindergehäuse einen Befestigungsflansch bzw. Stützkragen gegenüber der Tragstruktur aufweist. Dies ermöglicht eine stabile bzw. robuste Lagerung des wenigstens einen Hydraulikzylinders an der Tragstruktur der Deformierungsvorrichtung.

Vorteilhaft ist auch eine Ausprägung, gemäß welcher vorgesehen sein kann, dass an wenigstens einer der beiden Längsseiten der Tragstruktur eine Auffahrtsplattform oder ein Paar von in Längsrichtung der Tragstruktur zueinander distanzierten Auffahrtsrampen zur Aufstandsfläche angeordnet ist oder anordenbar ist. Dadurch können fahrbare oder zumindest rollfähige Kraftfahrzeuge in einfacher Art und Weise auf die gegenüber dem Aufstands- bzw. Bodenniveau der Deformierungsvorrichtung etwas erhöhte Aufstandsfläche verbracht werden. Ein Einsatz von Beschickungshilfsmitteln wie Ladekränen, Hubstaplern oder Windenvorrichtungen kann dadurch erübrigt werden.

Gemäß einer Weiterbildung ist es möglich, dass die Auffahrtsplattform oder die Auffahrtsrampen mit der Tragstruktur bedarfsweise lösbar verbunden sind, insbesondere einhakbar sind. Dadurch ist eine bedarfsweise Entfernung des jeweiligen Elements ermöglicht und ein möglichst freier Zugang zu dem zu deformierenden bzw. für Übungszwecke bereitgestellten Kraftfahrzeug gewährleistet. Außerdem kann dadurch eine auf öffentlichen Straßen maximal erlaubte Transportbreite der Deformierungsvorrichtung ohne Sondergenehmigung und ohne aufwändige mechanische Konstruktionen an der Tragstruktur eingehalten werden.

Ferner kann es zweckmäßig sein, wenn die Auffahrtsplattform oder die Auffahrtsrampen mit der Tragstruktur gelenkig verbunden sind, insbesondere um eine parallel zur Längsrichtung der Tragstruktur verlaufende Schwenkachse gegenüber der Aufstandsebene auf- und abklappbar gelagert sind. Dadurch ist ein unkompliziertes und rasches Handling gewährleistet. Zudem sind dadurch die genannten Elemente stabil bzw. verliersicher an der Deformierungsvorrichtung gehaltert. Durch eine Bolzenverbindung bzw. eine sonstige Steck- und Gelenksverbindung kann zudem die zuvor genannte, bedarfsweise Lösbarkeit erzielt werden.

Darüber hinaus kann vorgesehen sein, dass die Auffahrtsplattform oder die Auffahrtsrampen einen gegenüber einer Breite der Aufstandsebene der Tragstruktur in Breitenrichtung verlängerten Aufstand- oder Stützbereich für die Räder eines zu deformierenden Kraftfahrzeuges ausbilden. Insbesondere können dadurch die genannten Elemente als erweiterter Abstütz- bzw. Aufstandsbereich für die Räder eines zu deformierendes Kraftfahrzeuges fungieren. Dies ist insbesondere dann von erhöhter Zweckmäßigkeit, wenn der wenigstens eine Hydraulikzylinder parallel zur Längsachse der Deformierungsvorrichtung verläuft und die Fahrzeuglängsachse quer bzw. orthogonal zur Längsachse der Deformierungsvorrichtung ausgerichtet ist, also für den Fall einer Simulation eines Seitenaufpralls.

Insbesondere kann die Deformierungsvorrichtung dazu eingerichtet sein, dass das zu deformierende Kraftfahrzeug mit seiner Fahrzeuglängsachse parallel zur Breitenrichtung der Deformierungsvorrichtung auf dessen Aufstandsfläche abstellbar ist.

Des Weiteren kann vorgesehen sein, dass die Tragstruktur an wenigstens einer ihrer Längsseiten einen Beschickungsabschnitt bzw. ein Beschickungsfenster aufweist, dessen parallel und vertikal zur Längsrichtung der Tragstruktur verlaufende lichte Weite derart bemessen ist, dass ein zu deformierendes Kraftfahrzeug mittels eines Hubstaplers, Teleskopladers oder Lastenkranes auf die Abstützfläche verbringbar ist. Dadurch ist es möglich, auch fahr- bzw. rollunfähige Kraftfahrzeuge in rascher und einfacher Art und Weise in den Arbeitsbereich bzw. auf die Aufstandsfläche der Deformierungsvorrichtung zu verbringen. Aufwändige Einfädelungs- bzw. Verschiebevorgänge an einem zu deformierenden Kraftfahrzeug können so hintan gehalten werden.

Zum besseren Verständnis der Erfindung wird diese anhand der nachfolgenden Figuren näher erläutert.

Es zeigen jeweils in stark vereinfachter, beispielhafter Darstellung:
- Fig. 1: eine perspektivische Darstellung einer Deformierungsvorrichtung in Ansicht von hinten und schräg oben;
- Fig. 2: die Deformierungsvorrichtung gemäß Fig. 1 in perspektivischer Ansicht von vorne und schräg oben;
- Fig. 3: die Deformierungsvorrichtung gemäß den Fig. 1, 2 in Seitenansicht;
- Fig. 4: ein Distanzkörper zur Verwendung in Kombination mit der Deformierungsvorrichtung gemäß den Fig. 1-3.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

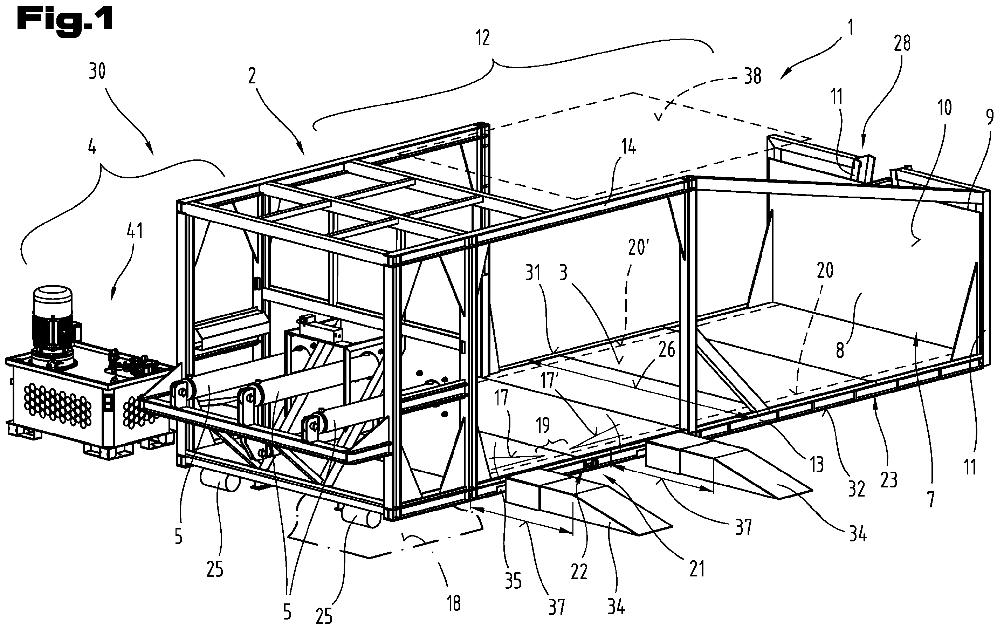

In den Fig. 1 bis 3 ist eine vorteilhafte Ausführungsform einer Deformierungsvorrichtung 1 für Kraftfahrzeuge, insbesondere für PKW und kleinere LKW, veranschaulicht. Diese Deformierungsvorrichtung 1 ist dazu eingerichtet, vor allem Karosserieabschnitte, wie beispielsweise eine Fahrgastzelle eines Kraftfahrzeuges, gezielt zu verformen, um anschließend an diesem entsprechend verformten Kraftfahrzeug simulierte Rettungseinsätze bzw. Personenbergungen zu üben. Bei derartigen Rettungseinsätzen können insbesondere Rettungswerkzeuge wie hydraulische Schneid-, Spreiz- oder Rettungszylinder zum Einsatz kommen. Die entsprechenden Übungsobjekte sind dabei in der Regel durch ausgediente und plangemäß deformierte Kraftfahrzeuge gebildet. Rettungs- bzw. Hilfsorganisationen, wie beispielsweise Feuerwehr oder technischer Hilfsdienst, können so deren Einsatzfähigkeit überprüfen und den Umgang mit den jeweiligen Rettungswerkzeugen für Personenbergungen möglichst realitätsnah trainieren.

Die Deformierungsvorrichtung 1 dient dabei der Nachstellung von verunfallten Kraftfahrzeugen, insbesondere in Bezug auf einen Front-, Seiten-, Heckaufprall oder in Zusammenhang mit Fahrzeugüberschlägen.

Die Deformierungsvorrichtung 1 umfasst eine mechanische Tragstruktur 2, welche vorzugsweise käfig- bzw. gitterartig ausgeführt ist. Die Tragstruktur 2 umgibt dabei im Einsatzzustand der Deformierungsvorrichtung 1 zum überwiegenden Teil die äußeren Abschnitte eines zu deformierenden Kraftfahrzeuges.

Die Tragstruktur 2 weist eine weitgehend eben ausgeführte Aufstandsfläche 3 für ein zur Verformung bereitgestelltes Kraftfahrzeug auf. Zudem ist eine vorzugsweise manuell steuerbare Kräfteeinleitungsvorrichtung 4 gegenüber dem zu verformenden Kraftfahrzeug vorgesehen. Die Kräfteeinleitungsvorrichtung 4 umfasst wenigstens einen Hydraulikzylinder 5 mit wenigstens einer Andrückfläche 6 gegenüber dem zu verformenden Kraftfahrzeug. Die Andrückflächen 6 können dabei durch Aufsteckteile bzw. stempelartige Aufsteckwerkzeuge gegenüber der Kolbenstange des wenigstens einen Hydraulikzylinders 5 definiert sein.

Weiters umfasst die Deformierungsvorrichtung 1 wenigstens ein Haltemittel 7 zum Festlegen des zu verformenden Kraftfahrzeuges relativ zur Aufstandsfläche 3 im Zuge eines Deformierungsvorganges gegenüber dessen Karosserieabschnitten. Das Haltemittel 7 umfasst wenigstens ein Widerlagerelement 8 für ein zu verformendes Kraftfahrzeug. Dieses mechanische Widerlagerelement 8 ist mit der Tragstruktur 2, insbesondere mit dessen Käfigstruktur, gekoppelt bzw. lastübertragend verbunden bzw. verbindbar. Vorzugsweise ist das wenigstens eine Widerlagerelement 8 durch eine Stützwand 9 gebildet, welche wenigstens eine vertikal ausgerichtete Abstützfläche 10 gegenüber dem zu deformierenden Kraftfahrzeug aufweist.

Dieses wenigstens eine Widerlagerelement 8 ist derart dimensioniert, dass es von der Kräfteeinleitungsvorrichtung 4 aufbringbare Verformungskräfte deformierungsfrei aufnehmen bzw. in die Tragstruktur 2 einleiten kann. Zweckmäßig ist es, wenn das Widerlagerelement 8 bzw. dessen Abstützfläche 10 durch eine Metallplatte gebildet ist, welche eine Längsabmessung zwischen 0,5 m und 2,5 m und eine Höhe zwischen 0,5 m und 2,0 m aufweist. Deren Wandstärke beträgt mehr als 5 mm.

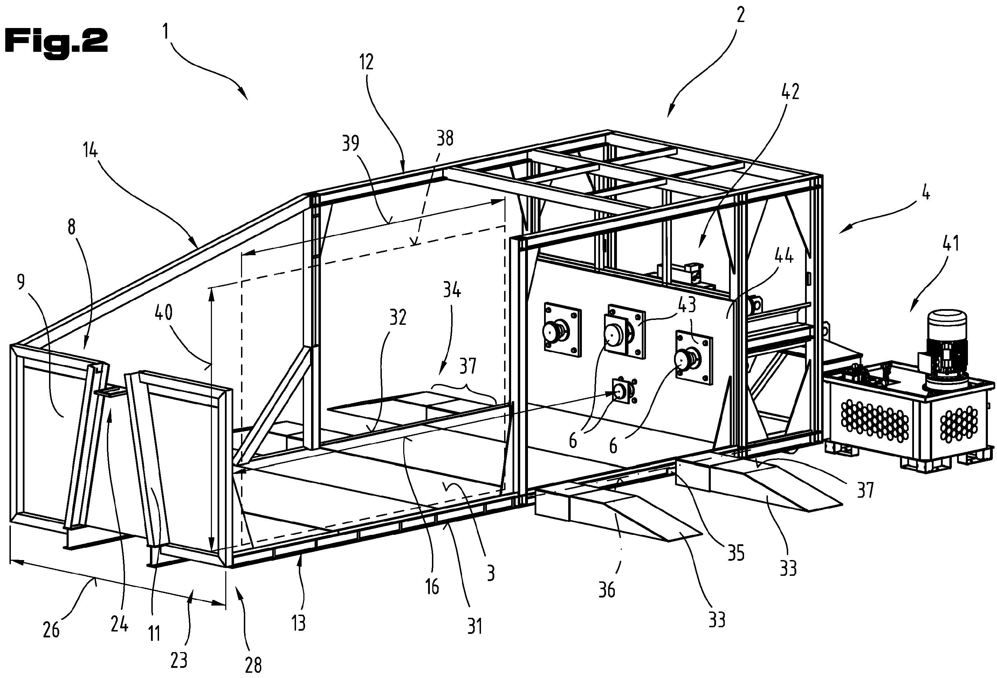

Wie vor allem aus einer Zusammenschau der Fig. 1 und 2 ersichtlich ist, kann das wenigstens eine Widerlagerelement 8 die Stützwand 9 und/oder mehrere Stützpfeiler 11 umfassen, um eine stabile Widerlagerkonstruktion für das zu deformierende Kraftfahrzeug zu bilden. Dadurch ist es nicht zwingend erforderlich, ein zu deformierendes Kraftfahrzeug mit Zurrmitteln, wie beispielsweise Ketten, Seilen oder Spannbändern, gegen Verrutschen auf der Deformierungsvorrichtung 1 festzulegen.

Die Tragstruktur 2 der Deformierungsvorrichtung 1 ist als Käfigstruktur 12 ausgeführt. Eine solche Käfigstruktur 12 weist einen Schubkräfte aufnehmenden Untergurtabschnitt 13 und einen in Vertikalrichtung zum Untergurtabschnitt 13 distanzierten, Schubkräfte aufnehmenden Obergurtabschnitt 14 auf. Vorzugsweise sind zwischen den Untergurtabschnitt 13 und dem Obergurtabschnitt 14 Freiräume bzw. Freistellungen und Sichtfenster ausgeführt. Die Untergurt- und Obergurtabschnitte 13, 14 werden vorzugsweise durch miteinander verbundene Metallprofile gebildet. Diese Metallprofile können als I-, U-, L- oder T-förmige Träger ausgeführt sein. Die von der Kräfteeinleitungsvorrichtung 4 generierbaren Druck- bzw. Schubkräfte werden dabei von der Käfigstruktur 12 zuverlässig und insbesondere deformierungsfrei aufgenommen. Auf die Käfigstruktur 12 wirken dabei überwiegend Zug- bzw. Dehnkräfte ein, welche von den zueinander distanzierten Untergurt- und Obergurtabschnitten 13, 14 aufgenommen werden.

Das wenigstens eine Widerlagerelement 8 bzw. deren Stützwand 9 und/oder deren Stützpfeiler 11 stellt bzw. stellen dabei eine Querverbindung zwischen dem Untergurtabschnitt 13 und dem Obergurtabschnitt 14 der käfigartigen Tragstruktur 2 dar.

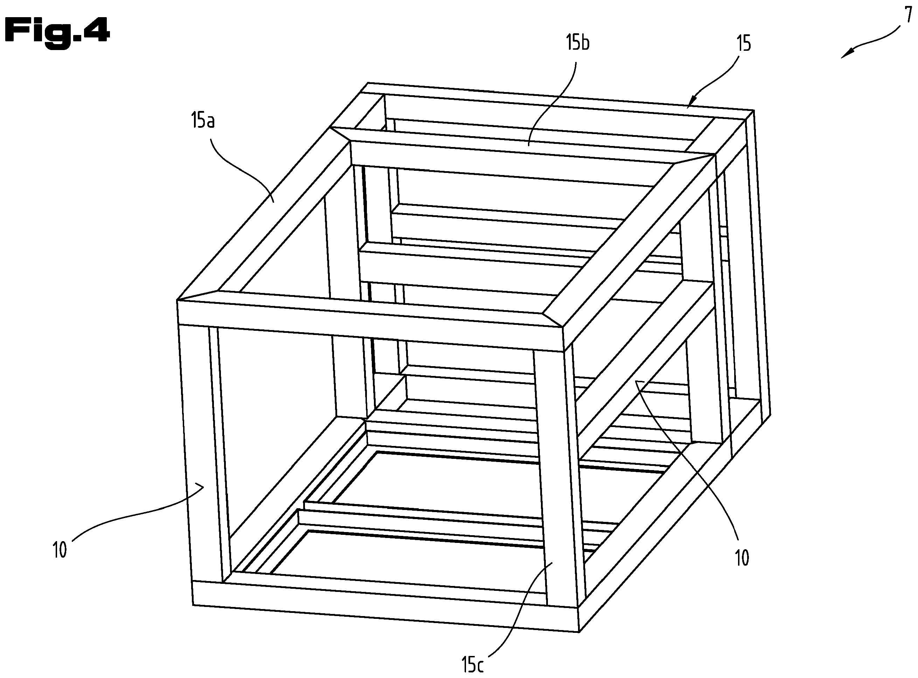

Wie aus Fig. 4 ersichtlich ist, kann das Haltemittel 7 für ein zu deformierendes Kraftfahrzeug weiters einen Distanzkörper 15 umfassen. Dieser Distanzkörper 15 ist baulich eigenständig ausgeführt und kann vorzugsweise quaderförmige Umrisskonturen aufweisen. Der gitter- bzw. rahmenartig ausgeführte Distanzkörper 15 kann in eine lichte Weite 16 zwischen der wenigstens einen Andrückfläche 6 des wenigstens einen Hydraulikzylinders 5 und dem wenigstens einen Widerlagerelement 8 bedarfsweise eingefügt und auf Wunsch aus der Deformierungsvorrichtung 1 wieder entnommen werden. Insbesondere ist es mittels diesem bedarfsweise einfüg- und entnehmbaren Distanzkörper 15 ermöglicht, die Position der Widerlagerfläche für ein zu deformierendes Kraftfahrzeug relativ zur Kräfteeinleitungsvorrichtung 4 in einfacher und robuster Art und Weise zu verändern bzw. an unterschiedliche Fahrzeuggrö-ßen anzupassen.

Der dargestellte Distanzkörper 15 weist eine Gitterstruktur aus einer Mehrzahl von miteinander verbundenen Profilelementen 15a, 15b, 15c auf. Auch dieser Distanzkörper 15 ist derart dimensioniert, dass er die von der Kräfteeinleitungsvorrichtung 4 generierbaren Kräfte bzw. Schubkräfte möglichst deformierungsfrei aufnehmen bzw. diesem standhalten kann. Der Distanzkörper 15 bildet so mehrere Abstützflächen 10 für ein zu deformierendes Kraftfahrzeug aus.

Wie in Fig. 1 symbolisch angedeutet wurde, ist es zweckmäßig, wenn die Aufstandsfläche 3 für ein zu verformendes Kraftfahrzeug in wenigstens einer Richtung ein Gefälle 17, 17' relativ zu einer horizontal ausgerichteten Abstütz- bzw. Aufstandsebene 18 der Deformierungsvorrichtung 1 aufweist. Insbesondere ist es zweckmäßig, wenn die Aufstandsfläche 3 für das zu deformierende Kraftfahrzeug in einem Winkel von wenigen Winkelgraden gegenüber der Aufstandsebene 18 der Deformierungsvorrichtung bzw. gegenüber einer horizontalen Ebene geneigt verläuft, um eine geordnete Sammlung von aus dem zu deformierenden Kraftfahrzeug gegebenenfalls austretenden Flüssigkeiten zu ermöglichen. Ein Gefälle 17, 17' zwischen 1 % und 10 % ist dabei in der Regel ausreichend. Diese Gefälle 17, 17' in der Aufstandsfläche 3 können dabei in Längs- und/oder Breitenrichtung der Deformierungsvorrichtung 1 verlaufen. Sie können längsmittig zusammenlaufen oder in Richtung zu wenigstens einer Längsseite 31 oder in Richtung zu beiden Längsseiten 31, 32 der Deformierungsvorrichtung 1 verlaufen.

Insbesondere kann die Aufstandsfläche 3 als eine Art Auffangwanne 19 für Flüssigkeiten ausgeführt sein. Alternativ oder in Kombination dazu kann in der Aufstandsfläche 3 wenigstens eine nach oben hin offene Rinne 20, 20' ausgeführt sein. Diese wenigstens eine Auffangwanne 19 und/oder wenigstens eine Rinne 20, 20' in bzw. an der Aufstandsfläche 3 für ein zu deformierendes Kraftfahrzeug dient insbesondere dem Auffangen und/oder dem gebündelten Sammeln von aus einem Kraftfahrzeug gegebenenfalls austretenden Flüssigkeiten, wie zum Beispiel Ölen, Kühlflüssigkeiten, Bremsflüssigkeiten und dergleichen Betriebsmittel von Kraftfahrzeugen. Das Rückhaltevolumen der Auffangwanne 19 bzw. der zumindest einen Rinne 20, 20' beträgt zumindest 5 Liter und kann bis zu etwa 200 Liter betragen.

Zudem kann vorgesehen sein, dass an dem niveaumäßig tiefsten Punkt bzw. Bereich der Auffangwanne 19 und/oder der wenigstens einen Rinne 20, 20' eine Abflussöffnung 21 für aus einem Kraftfahrzeug ausgetretene Flüssigkeiten ausgebildet ist. Mittels dieser Abflussöffnung 21 können die an der Deformierungsvorrichtung 1 bzw. an dessen Aufstandsfläche 3 angesammelten Rest-Flüssigkeiten aus einem deformierten Kraftfahrzeug von der Deformierungsvorrichtung 1 entfernt werden, ohne dass sie in den Boden im Umgebungsbereich der Deformierungsvorrichtung 1 gelangen. Zweckmäßig ist es dabei, wenn der Abflussöffnung 21 ein vorzugsweise manuell bedienbarer Ablasshahn 22 bzw. ein funktional äquivalentes Ventil bzw. ein bedarfsweise anbring- und entfernbarer Stopfen zugeordnet ist, um den Ablass- bzw. Entsorgungsvorgang zielgerichtet bzw. koordiniert ausführen zu können.

Zweckmäßigerweise ist die Aufstandsfläche 3 für das zu deformierende Kraftfahrzeug Kehrricht-dicht ausgeführt. Hierfür können möglichst großflächige Blechtafeln, oder Kunststoff- bzw. Holzlaminat-Platten eingesetzt werden, welche auf dem Untergurtabschnitt 13 abgestützt sind. Dadurch kann ein möglichst fugen- bzw. spaltfreier Bodenaufbau geschaffen werden, welcher eine unerwünschte Ansammlung von Scherben, Splitter oder sonstigen Bruchstücken hintan hält und welcher eine gründliche Reinigung bzw. ein einfaches Aufkehren der Aufstandsfläche 3 ermöglicht. Fugen bzw. Stöße zwischen aneinander gereihten Bodenelementen können dabei ausgefüllt bzw. verfugt sein, um Spalten bzw. Ritzen hintan zu halten. Der Untergurtabschnitt 13 der Tragstruktur 12 umfasst vorzugsweise ein Fachwerk aus einer Mehrzahl von parallel und quer zueinander verlaufenden Profilelementen, welche fest miteinander verbunden, insbesondere miteinander verschweißt und/oder verschraubt sind.

Die Tragstruktur 2 bzw. die gesamte Deformierungsvorrichtung 1 ist als bedarfsweise absetzbarer LKW-Aufbau 23 ausgeführt. Insbesondere ist die Deformierungsvorrichtung 1 bzw. deren Tragstruktur 2 als Wechsellader-Aufbau ausgebildet und umfasst einen dementsprechenden Aufziehhaken 24 und wenigstens eine Absetzrolle 25 an dem Untergurtabschnitt 13. Vorzugsweise sind zwei in Breitenrichtung der Tragstruktur 2 zueinander beabstandete, achsgleich ausgerichtete Absetzrollen 25 ausgebildet, wie dies am besten aus Fig. 1 ersichtlich ist.

Die mechanische Tragstruktur 2 weist eine quer zur Längsrichtung der Deformierungsvorrichtung 1 bzw. quer zur Längsachse des wenigstens einen Hydraulikzylinders 5 verlaufende Breite von maximal 2550 mm auf, sodass dieser LKW-Aufbau 23 ohne erforderlicher Sondergenehmigung bzw. ohne Sondertransportanforderungen im europäischen Raum mittels einem LKW auf öffentlichen Straßen transportierbar ist.

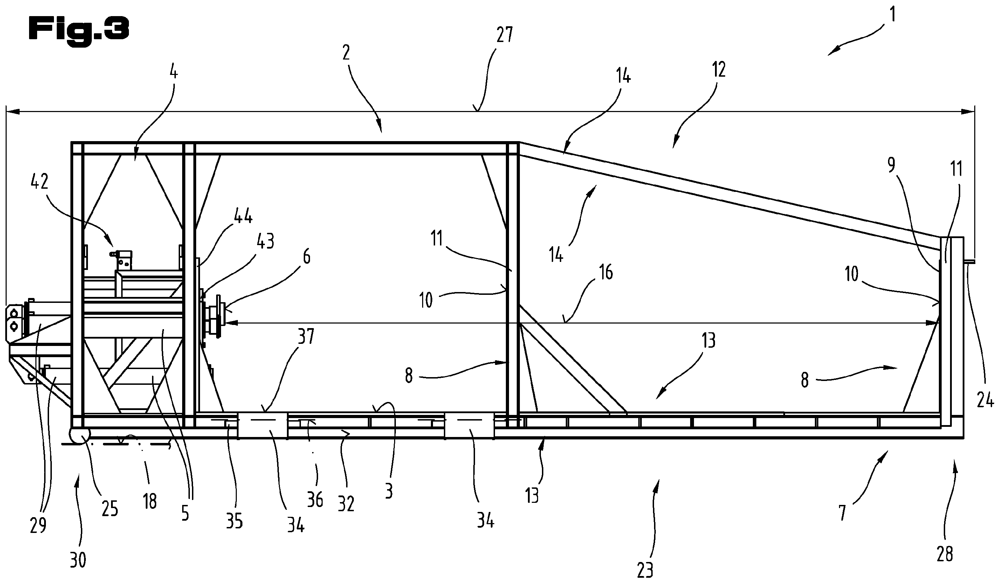

Eine parallel zu einer Längsachse des wenigstens einen Hydraulikzylinders 5 verlaufende Länge 27 - Fig. 3 - der Deformierungsvorrichtung 1 beträgt zwischen 5000 mm und 9000 mm, um so ein breites Spektrum an unterschiedlichen, zu deformierenden Kraftfahrzeugen abdecken zu können und darüber hinaus mittels einem LKW ohne erforderlicher Sonderzulassungen transportierbar zu sein.

Der Aufziehhaken 24 des Wechsellader-Aufbaus ist unmittelbar am Widerlagerelement 8, insbesondere an dessen Stützwand 9 für ein zu deformierendes Kraftfahrzeug befestigt. Wie weiters aus den Fig. 1 und 2 ersichtlich ist, ist das Widerlagerelement 8 an einem in Bezug auf die Transportrichtung des LKW-Aufbaus 23 vorderen Längsende 28 der Tragstruktur 2 ausgebildet. Dies ergibt einen mechanisch bzw. konstruktiv vorteilhaften Grundaufbau der Deformierungsvorrichtung 1.

Demgegenüber ist ein Zylinderboden 29 des wenigstens einen Hydraulikzylinders 5 einem in Bezug auf die Transportrichtung des LKW-Aufbaus 23 hinteren Längsende 30 der Tragstruktur 2 nächstliegend zugeordnet.

An wenigstens einer der beiden Längsseiten 31, 32 der Tragstruktur 2 ist eine Auffahrtsplattform bzw. sind ein Paar von in Längsrichtung der Tragstruktur 2 zueinander distanzierter Auffahrtsrampen 33, 34 angeordnet bzw. anordenbar. Mit diesen Auffahrtsrampen 33, 34 ist ein zu deformierendes Kraftfahrzeug relativ einfach bzw. mühelos auf die Aufstandsfläche 3 verbringbar. Insbesondere kann dadurch auf die Aufstandsfläche 3 aufgefahren bzw. das zu deformierende Fahrzeug auf die Aufstandsfläche geschoben bzw. gezogen werden. Die zu überwindende Auffahrtshöhe ist im Wesentlichen durch die vertikale Höhe des Untergurtabschnittes 13 bestimmt.

Die entsprechende Auffahrtsplattform bzw. die wenigstens eine Auffahrtsrampe 33, 34 ist mit der Tragstruktur 2, insbesondere mit dessen Längsseiten 31 bzw. 32 bedarfsweise lösbar verbunden. Praktikabel ist es, wenn die wenigstens eine Auffahrtsrampe bzw. das Paar von Auffahrtsrampen 33, 34 über Halteschienen 35 an den Längsseiten 31 bzw. 32 der Tragstruktur 2 bedarfsweise ein- und aushakbar ist.

Weiters kann vorgesehen sein, dass die Auffahrtsplattform bzw. die Auffahrtsrampen 33, 34 mit der Tragstruktur 2 gelenkig verbunden sind. Insbesondere kann die Auffahrtsplattform bzw. können die Einzelelemente des Paares von Auffahrtsrampen 33, 34 um eine parallel zur Längsrichtung der Tragstruktur 2 verlaufende Schwenkachse 36 gegenüber der Aufstandsebene 3 auf- und abklappbar gelagert sein. Dabei ist es auch möglich, durch eine bedarfsweise aktivier- und deaktivierbare Gelenksverbindung die Auffahrtsplattform bzw. die wenigstens eine Auffahrtsrampe 33, 34 gegenüber der Tragstruktur 2 demontierbar bzw. ein- und aushakbar zu gestalten.

Zweckmäßig ist es, wenn die Auffahrtsplattform bzw. die Auffahrtsrampen 33, 34 derart ausgeführt sind, dass sie eine gegenüber der Breite 26 der Aufstandsebene 3 der Tragstruktur 2 in Breitenrichtung verlängerten Aufstands- oder Stützbereich 37 für die Räder eines zu deformierenden Kraftfahrzeuges ausbilden. Dadurch ist es in einfacher Art und Weise möglich, ein zu deformierendes Kraftfahrzeug sicher bzw. plangemäß quer zur Längsrichtung der Deformierungsvorrichtung 1 auszurichten und in dieser Relativstellung vor allem Seitenaufpralldeformierungen mittels der Deformierungsvorrichtung 1 nachzustellen. Die Hydraulikzylinder 5 der Deformierungsvorrichtung 1 sind dabei parallel zur Längsrichtung der Tragstruktur 2 ausgerichtet.

Die Tragstruktur 2 weist an wenigstens einer ihrer Längsseiten 31, 32, beispielsgemäß an der Längsseite 31, einen Beschickungsabschnitt 38 auf. Dessen parallel zur Längsrichtung der Tragstruktur 2 verlaufende lichte Weite 39, 40 ist derart bemessen, dass ein zu deformierendes Kraftfahrzeug mittels einer Hubvorrichtung, beispielsweise einem Hubstapler, Teleskoplader oder Lastenkran auf die Aufstandsfläche 3 verbringbar ist. Hierfür kann gegebenenfalls der Obergurtabschnitt 14 im Beschickungsabschnitt 38 freigestellt bzw. ausgespart sein. Zudem sind vertikale Stützpfeiler der Tragstruktur 2 derart angeordnet, dass die lichte Weite 39 in horizontaler Richtung ausreichend ist, um ein zu deformierendes Kraftfahrzeug auf die Aufstandsfläche 3 zu heben.

Optional kann innerhalb des Beschickungsabschnittes 38 wenigstens eine aktivier- und deaktivierbare Stützstrebe für die Tragstruktur 2 vorgesehen sein. Insbesondere ist diese wenigstens eine Stützstrebe dazu vorgesehen, nach der Beschickung der Deformierungsvorrichtung 1 mit einem zu deformierenden Kraftfahrzeug und vor der Einleitung eines Deformierungsvorganges aktiviert zu werden. Eine solche Stützstrebe kann gegenüber der Tragstruktur 2 ein- und aushängbar, auf- und abklappbar, oder positionsverschiebbar ausgeführt sein.

Wie in Fig. 3 veranschaulicht, kann auch wenigstens ein Stützpfeiler 11 in einem mittleren Teilabschnitt der Tragstruktur 2 als Widerlagerelement 8 für ein zu verformendes Kraftfahrzeug eingerichtet sein. Dieses weitere Widerlagerelement 8 im mittleren Teilabschnitt kann insbesondere in Zusammenhang mit der Simulation von Seitenaufprall-Verformungen an Kraftfahrzeugen zweckmäßig sein. Die Abstützflächen 10 für ein zu deformierendes Kraftfahrzeug sind dabei an dem wenigstens einen Stützpfeiler 11 ausgebildet. Vorzugsweise ist ein Paar von Stützpfeilern 11 an den einander gegenüberliegenden Längsseite 31, 32 der Tragstruktur 2 ausgebildet.

Die Kräfteeinleitungsvorrichtung 4 umfasst ein vorzugsweise baulich eigenständig ausgeführtes Hydraulikaggregat 41. Dieses umfasst in an sich bekannter Weise wenigstens einen Elektromotor, eine davon angetriebene Pumpeneinheit, eine Filtervorrichtung und einen das Hydrauliköl aufnehmenden Tank. Das Hydraulikaggregat 41 ist mittels flexibler Schlauchleitungen und hydraulischer Schnellkupplungen mit dem wenigstens einen Hydraulikzylinder 5 bzw. mit einer an der Tragstruktur angeordneten Ventileinheit 42 fluidisch verbindbar. Der Tank des Hydraulikaggregats 41 ist vorzugsweise doppelwandig ausgeführt und ist dieser hinsichtlich Leckagen energieunabhängig überwacht.

Der wenigstens eine Hydraulikzylinder 5 ist vorzugsweise als Flanschzylinder ausgeführt, welcher bzw. welche im Bereich der Kolbenaustrittsseite am Zylindergehäuse einen Befestigungsflansch 43 aufweist bzw. aufweisen. Mittels diesem Befestigungsflansch 43 ist der wenigstens eine Hydraulikzylinder 5 lastabtragend an einer Zylinder-Montageplatte 44 aus Metall abgestützt. Die vertikal ausgerichtete Zylinder-Montageplatte 44 ist mit der Tragstruktur 2 mechanisch verbunden.

Vorzugsweise sind zumindest drei, beispielsgemäß vier, Hydraulikzylinder 5 vorgesehen. Zweckmäßig ist es dabei, wenn diese Mehrzahl an Hydraulikzylindern 5 in zumindest zwei unterschiedlichen Höhenpositionen relativ zur Aufstandsfläche 3 für ein zu deformierendes Kraftfahrzeug angeordnet ist. Die Hydraulikzylinder 5 bzw. deren Zylindergehäuse sind relativ zur Tragstruktur 2 starr festgelegt, um eine stabile und robuste Konstruktion gewährleisten zu können. Durch die Mehrzahl an einzelnen Hydraulikzylindern 5 ist eine variantenreiche und möglichst realitätsnahe Deformierung von Kraftfahrzeug-Karosserien erzielbar.

Das Ausführungsbeispiel zeigt mögliche Ausführungsvarianten, wobei an dieser Stelle bemerkt sei, dass die Erfindung nicht auf das speziell dargestellte Ausführungsbeispiel eingeschränkt ist, sondern vielmehr auch diverse Kombinationen der einzelnen Ausführungsvarianten möglich sind und diese Variationsmöglichkeit aufgrund der Lehre zum technischen Handeln durch gegenständliche Erfindung im Können des auf diesem technischen Gebiet tätigen Fachmannes liegt.

Der Schutzbereich ist durch die Ansprüche bestimmt. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

### Bezugszeichenaufstellung

| | | | |
|---|---|---|---|
| 1 | Deformierungsvorrichtung | 29 | Zylinderboden |
| | | 30 | hinteres Längsende |
| 2 | Tragstruktur | 31 | Längsseite |
| 3 | Aufstandsfläche | 32 | Längsseite |
| 4 | Kräfteeinleitungsvorrichtung | 33 | Auffahrtsrampe |
| 5 | Hydraulikzylinder | 34 | Auffahrtsrampe |
| 6 | Andrückfläche | 35 | Halteschiene |
| 7 | Haltemittel | 36 | Schwenkachse |
| 8 | Widerlagerelement | 37 | Aufstands- oder Stützbereich |
| 9 | Stützwand | 38 | Beschickungsabschnitt |
| 10 | Abstützfläche | 39 | lichte Weite |
| 11 | Stützpfeiler | 40 | lichte Weite |
| 12 | Käfigstruktur | 41 | Hydraulikaggregat |
| 13 | Untergurtabschnitt | 42 | Ventileinheit |
| 14 | Obergurtabschnitt | 43 | Befestigungsflansch |
| 15 | Distanzkörper | 44 | Zylinder-Montageplatte |
| 15a-c | Profilelemente | | |
| 16 | lichte Weite | | |
| 17,17' | Gefälle | | |
| 18 | Aufstandsebene | | |
| 19 | Auffangwanne | | |
| 20, 20' | Rinne | | |
| 21 | Abflussöffnung | | |
| 22 | Ablasshahn | | |
| 23 | LKW-Aufbau | | |
| 24 | Aufziehhaken | | |
| 25 | Absetzrolle | | |
| 26 | Breite | | |
| 27 | Länge | | |
| 28 | vorderes Längsende | | |

## Patentansprüche (Patentansprüche für folgende(n) Vertragsstaat(en): FR)

1. Deformierungsvorrichtung (1) zur gezielten Verformung von Karosserieabschnitten von Kraftfahrzeugen, umfassend
- eine Tragstruktur (2) mit einer Aufstandsfläche (3) für ein zu verformendes Kraftfahrzeug,
- eine steuerbare Kräfteeinleitungsvorrichtung (4) gegenüber dem zu verformenden Kraftfahrzeug, welche Kräfteeinleitungsvorrichtung (4) wenigstens einen Hydraulikzylinder (5) mit wenigstens einer Andrückfläche (6) gegenüber dem zu verformenden Kraftfahrzeug umfasst, und
- ein Haltemittel (7) zum Festlegen des zu verformenden Kraftfahrzeuges relativ zur Aufstandsfläche (3),
- wobei das Haltemittel (7) wenigstens ein Widerlagerelement (8) umfasst, welches mit der Tragstruktur (2) lastübertragend verbunden oder verbindbar ist,
- welches wenigstens eine Widerlagerelement (8) wenigstens eine Abstützfläche (10) gegenüber dem zu deformierenden Kraftfahrzeug aufweist,
- und welches wenigstens eine Widerlagerelement (8) von der Kräfteeinleitungsvorrichtung (4) aufbringbare Verformungskräfte deformierungsfrei aufnehmen kann,
**dadurch gekennzeichnet, dass**
eine von einer Bedienperson tragbare Bedieneinheit ausgebildet ist, welche zur manuellen und selektiven Aktivierung von Aus- und Einfahrbewegungen von zumindest zwei Hydraulikzylindern (5) eingerichtet ist.

2. Deformierungsvorrichtung nach Anspruch 1 **dadurch gekennzeichnet, dass** die Tragstruktur (2) als Käfigstruktur (12) ausgeführt ist, welche Käfigstruktur (12) einen Schubkräfte aufnehmenden Untergurtabschnitt (13) aufweist und einen in Vertikalrichtung zum Untergurtabschnitt (13) distanzierten, Schubkräfte aufnehmenden Obergurtabschnitt (14) aufweist.

3. Deformierungsvorrichtung nach Anspruch 1 oder 2 **dadurch gekennzeichnet, dass** das wenigstens eine Widerlagerelement (8) eine Stützwand (9) und/oder mehrere Stützpfeiler (11) umfasst.

4. Deformierungsvorrichtung nach einem der vorhergehenden Ansprüche **dadurch gekennzeichnet, dass** das Haltemittel (7) einen Distanzkörper (15) umfasst, welcher Distanzkörper (15) in eine lichte Weite (16) zwischen der wenigstens einen Andrückfläche (6) des wenigstens einen Hydraulikzylinders (5) und dem wenigstens einen Widerlagerelement (8) bedarfsweise einfügbar ist.

5. Deformierungsvorrichtung nach einem der vorhergehenden Ansprüche **dadurch gekennzeichnet, dass** die Aufstandsfläche (3) für ein zu verformendes Kraftfahrzeug in wenigstens einer Richtung ein Gefälle (17, 17') relativ zu einer horizontal ausgerichteten Aufstandsebene (18) der Deformierungsvorrichtung (1) aufweist.

6. Deformierungsvorrichtung nach einem der vorhergehenden Ansprüche **dadurch gekennzeichnet, dass** die Aufstandsfläche (3) als Auffangwanne (19) ausgeführt ist und/oder in der Aufstandsfläche (3) wenigstens eine Rinne (20, 20') ausgebildet ist, sodass ein Auffangen und/oder ein gebündeltes Sammeln von aus einem Kraftfahrzeug austretenden Flüssigkeiten ermöglicht ist.

7. Deformierungsvorrichtung nach Anspruch 5 oder 6 **dadurch gekennzeichnet, dass** an dem niveaumäßig tiefsten Punkt der Auffangwanne (19) und/oder der Rinne (20, 20') eine Abflussöffnung (21) für aus einem Kraftfahrzeug ausgetretene Flüssigkeiten ausgebildet ist.

8. Deformierungsvorrichtung nach Anspruch 7 **dadurch gekennzeichnet, dass** der Abflussöffnung (21) ein Ablasshahn (22) oder ein bedarfsweise anbring- und entfernbarer Stopfen zugeordnet ist.

9. Deformierungsvorrichtung nach einem der vorhergehenden Ansprüche **dadurch gekennzeichnet, dass** die Aufstandsfläche (3) Kehricht-dicht ausgebildet ist.

10. Deformierungsvorrichtung nach einem der vorhergehenden Ansprüche **dadurch gekennzeichnet, dass** die Tragstruktur (2) als absetzbarer LKW-Aufbau (23) mit einem Aufziehhaken (24) und wenigstens einer Absetzrolle (25) oder als seil- oder kettenkoppelbarer LKW-Absetzaufbau ausgeführt ist.

11. Deformierungsvorrichtung nach einem der vorhergehenden Ansprüche **dadurch gekennzeichnet, dass** die Tragstruktur (2) eine quer zu einer Längsachse des wenigstens einen Hydraulikzylinders (5) verlaufende Breite (26) von maximal etwa 2550 mm aufweist.

12. Deformierungsvorrichtung nach einem der vorhergehenden Ansprüche **dadurch gekennzeichnet, dass** die Tragstruktur (2) eine parallel zu einer Längsachse des wenigstens einen Hydraulikzylinders (5) verlaufende Länge (27) aufweist, welche zwischen 5000 mm und 9000 mm beträgt.

13. Deformierungsvorrichtung nach einem der Ansprüche 10-12 **dadurch gekennzeichnet, dass** das wenigstens eine Widerlagerelement (8) an einem in Bezug auf die Transportrichtung des LKW-Aufbaus (23) vorderen Längsende (28) der Tragstruktur (2) ausgebildet ist und der Aufziehhaken (24) am Widerlagerelement (8) befestigt ist.

14. Deformierungsvorrichtung nach einem der Ansprüche 10-13 **dadurch gekennzeichnet, dass** ein Zylinderboden (29) des wenigstens einen Hydraulikzylinders (5) einem in Bezug auf die Transportrichtung des LKW-Aufbaus (23) hinteren Längsende (30) der Tragstruktur (2) nächstliegend zugeordnet ist.

15. Deformierungsvorrichtung nach einem der vorhergehenden Ansprüche **dadurch gekennzeichnet, dass** an wenigstens einer der beiden Längsseiten (31, 32) der Tragstruktur (2) eine Auffahrtsplattform oder ein Paar von in Längsrichtung der Tragstruktur (2) zueinander distanzierten Auffahrtsrampen (33, 34 ) zur Aufstandsfläche (3) angeordnet ist oder anordenbar ist.

16. Deformierungsvorrichtung nach Anspruch 15 **dadurch gekennzeichnet, dass** die Auffahrtsplattform oder die Auffahrtsrampen (33, 34) mit der Tragstruktur (2) bedarfsweise lösbar verbunden sind, insbesondere einhakbar sind.

17. Deformierungsvorrichtung nach Anspruch 15 oder 16 **dadurch gekennzeichnet, dass** die Auffahrtsplattform oder die Auffahrtsrampen (33, 34) mit der Tragstruktur (2) gelenkig verbunden sind, insbesondere um eine parallel zur Längsrichtung der Tragstruktur (2) verlaufende Schwenkachse (36) gegenüber der Aufstandsfläche (3) auf- und abklappbar gelagert sind.

18. Deformierungsvorrichtung nach einem der Ansprüche 15-17 **dadurch gekennzeichnet, dass** die Auffahrtsplattform oder die Auffahrtsrampen (33, 34) einen gegenüber einer Breite (26) der Aufstandsfläche (3) der Tragstruktur (2) in Breitenrichtung verlängerten Aufstand- oder Stützbereich (37) für die Räder eines zu deformierenden Kraftfahrzeuges ausbilden.

19. Deformierungsvorrichtung nach einem der vorhergehenden Ansprüche **dadurch gekennzeichnet, dass** die Tragstruktur (2) an wenigstens einer ihrer Längsseiten (31, 32) einen Beschickungsabschnitt (38) aufweist, dessen parallel und vertikal zur Längsrichtung der Tragstruktur (2) verlaufende lichte Weite (39, 40) derart bemessen ist, dass ein zu deformierendes Kraftfahrzeug mittels eines Hubstaplers, Teleskopladers oder Lastenkranes auf die Aufstandsfläche (3) verbringbar ist.

## Patentansprüche (Patentansprüche für folgende(n) Vertragsstaat(en): AT, BE, CH, DE, DK, ES, GB, GR, IT, LI, LU, NL, SE, MC, PT, IE, SI, LT, LV, FI, RO, MK, CY, AL, TR, BG, CZ, EE, HU, PL, SK, HR ,IS, MT, NO, RS, SM)

1. Deformierungsvorrichtung (1) zur gezielten Verformung von Karosserieabschnitten von Kraftfahrzeugen, umfassend
- eine Tragstruktur (2) mit einer Aufstandsfläche (3) für ein zu verformendes Kraftfahrzeug,
- eine steuerbare Kräfteeinleitungsvorrichtung (4) gegenüber dem zu verformenden Kraftfahrzeug, welche Kräfteeinleitungsvorrichtung (4) wenigstens einen Hydraulikzylinder (5) mit wenigstens einer Andrückfläche (6) gegenüber dem zu verformenden Kraftfahrzeug umfasst, und
- ein Haltemittel (7) zum Festlegen des zu verformenden Kraftfahrzeuges relativ zur Aufstandsfläche (3),
**dadurch gekennzeichnet, dass**
das Haltemittel (7) wenigstens ein Widerlagerelement (8) umfasst, welches mit der Tragstruktur (2) lastübertragend verbunden oder verbindbar ist,
welches wenigstens eine Widerlagerelement (8) wenigstens eine Abstützfläche (10) gegenüber dem zu deformierenden Kraftfahrzeug aufweist,
und welches wenigstens eine Widerlagerelement (8) von der Kräfteeinleitungsvorrichtung (4) aufbringbare Verformungskräfte deformierungsfrei aufnehmen kann.

2. Deformierungsvorrichtung nach Anspruch 1 **dadurch gekennzeichnet, dass** die Tragstruktur (2) als Käfigstruktur (12) ausgeführt ist, welche Käfigstruktur (12) einen Schubkräfte aufnehmenden Untergurtabschnitt (13) aufweist und einen in Vertikalrichtung zum Untergurtabschnitt (13) distanzierten, Schubkräfte aufnehmenden Obergurtabschnitt (14) aufweist.

3. Deformierungsvorrichtung nach Anspruch 1 oder 2 **dadurch gekennzeichnet, dass** das wenigstens eine Widerlagerelement (8) eine Stützwand (9) und/oder mehrere Stützpfeiler (11) umfasst.

4. Deformierungsvorrichtung nach einem der vorhergehenden Ansprüche **dadurch gekennzeichnet, dass** das Haltemittel (7) einen Distanzkörper (15) umfasst, welcher Distanzkörper (15) in eine lichte Weite (16) zwischen der wenigstens einen Andrückfläche (6) des wenigstens einen Hydraulikzylinders (5) und dem wenigstens einen Widerlagerelement (8) bedarfsweise einfügbar ist.

5. Deformierungsvorrichtung nach einem der vorhergehenden Ansprüche **dadurch gekennzeichnet, dass** die Aufstandsfläche (3) für ein zu verformendes Kraftfahrzeug in wenigstens einer Richtung ein Gefälle (17, 17') relativ zu einer horizontal ausgerichteten Aufstandsebene (18) der Deformierungsvorrichtung (1) aufweist.

6. Deformierungsvorrichtung nach einem der vorhergehenden Ansprüche **dadurch gekennzeichnet, dass** die Aufstandsfläche (3) als Auffangwanne (19) ausgeführt ist und/oder in der Aufstandsfläche (3) wenigstens eine Rinne (20, 20') ausgebildet ist, sodass ein Auffangen und/oder ein gebündeltes Sammeln von aus einem Kraftfahrzeug austretenden Flüssigkeiten ermöglicht ist.

7. Deformierungsvorrichtung nach Anspruch 5 oder 6 **dadurch gekennzeichnet, dass** an dem niveaumäßig tiefsten Punkt der Auffangwanne (19) und/oder der Rinne (20, 20') eine Abflussöffnung (21) für aus einem Kraftfahrzeug ausgetretene Flüssigkeiten ausgebildet ist.

8. Deformierungsvorrichtung nach Anspruch 7 **dadurch gekennzeichnet, dass** der Abflussöffnung (21) ein Ablasshahn (22) oder ein bedarfsweise anbring- und entfernbarer Stopfen zugeordnet ist.

9. Deformierungsvorrichtung nach einem der vorhergehenden Ansprüche **dadurch gekennzeichnet, dass** die Aufstandsfläche (3) Kehricht-dicht ausgebildet ist.

10. Deformierungsvorrichtung nach einem der vorhergehenden Ansprüche **dadurch gekennzeichnet, dass** die Tragstruktur (2) als absetzbarer LKW-Aufbau (23) mit einem Aufziehhaken (24) und wenigstens einer Absetzrolle (25) oder als seil- oder kettenkoppelbarer LKW-Absetzaufbau ausgeführt ist.

11. Deformierungsvorrichtung nach einem der vorhergehenden Ansprüche **dadurch gekennzeichnet, dass** die Tragstruktur (2) eine quer zu einer Längsachse des wenigstens einen Hydraulikzylinders (5) verlaufende Breite (26) von maximal etwa 2550 mm aufweist.

12. Deformierungsvorrichtung nach einem der vorhergehenden Ansprüche **dadurch gekennzeichnet, dass** die Tragstruktur (2) eine parallel zu einer Längsachse des wenigstens einen Hydraulikzylinders (5) verlaufende Länge (27) aufweist, welche zwischen 5000 mm und 9000 mm beträgt.

13. Deformierungsvorrichtung nach einem der Ansprüche 10-12 **dadurch gekennzeichnet, dass** das wenigstens eine Widerlagerelement (8) an einem in Bezug auf die Transportrichtung des LKW-Aufbaus (23) vorderen Längsende (28) der Tragstruktur (2) ausgebildet ist und der Aufziehhaken (24) am Widerlagerelement (8) befestigt ist.

14. Deformierungsvorrichtung nach einem der Ansprüche 10-13 **dadurch gekennzeichnet, dass** ein Zylinderboden (29) des wenigstens einen Hydraulikzylinders (5) einem in Bezug auf die Transportrichtung des LKW-Aufbaus (23) hinteren Längsende (30) der Tragstruktur (2) nächstliegend zugeordnet ist.

15. Deformierungsvorrichtung nach einem der vorhergehenden Ansprüche **dadurch gekennzeichnet, dass** an wenigstens einer der beiden Längsseiten (31, 32) der Tragstruktur (2) eine Auffahrtsplattform oder ein Paar von in Längsrichtung der Tragstruktur (2) zueinander distanzierten Auffahrtsrampen (33, 34 ) zur Aufstandsfläche (3) angeordnet ist oder anordenbar ist.

16. Deformierungsvorrichtung nach Anspruch 15 **dadurch gekennzeichnet, dass** die Auffahrtsplattform oder die Auffahrtsrampen (33, 34) mit der Tragstruktur (2) bedarfsweise lösbar verbunden sind, insbesondere einhakbar sind.

17. Deformierungsvorrichtung nach Anspruch 15 oder 16 **dadurch gekennzeichnet, dass** die Auffahrtsplattform oder die Auffahrtsrampen (33, 34) mit der Tragstruktur (2) gelenkig verbunden sind, insbesondere um eine parallel zur Längsrichtung der Tragstruktur (2) verlaufende Schwenkachse (36) gegenüber der Aufstandsfläche (3) auf- und abklappbar gelagert sind.

18. Deformierungsvorrichtung nach einem der Ansprüche 15-17 **dadurch gekennzeichnet, dass** die Auffahrtsplattform oder die Auffahrtsrampen (33, 34) einen gegenüber einer Breite (26) der Aufstandsfläche (3) der Tragstruktur (2) in Breitenrichtung verlängerten Aufstand- oder Stützbereich (37) für die Räder eines zu deformierenden Kraftfahrzeuges ausbilden.

19. Deformierungsvorrichtung nach einem der vorhergehenden Ansprüche **dadurch gekennzeichnet, dass** die Tragstruktur (2) an wenigstens einer ihrer Längsseiten (31, 32) einen Beschickungsabschnitt (38) aufweist, dessen parallel und vertikal zur Längsrichtung der Tragstruktur (2) verlaufende lichte Weite (39, 40) derart bemessen ist, dass ein zu deformierendes Kraftfahrzeug mittels eines Hubstaplers, Teleskopladers oder Lastenkranes auf die Aufstandsfläche (3) verbringbar ist.

20. Deformierungsvorrichtung nach einem der vorhergehenden Ansprüche **dadurch gekennzeichnet, dass** eine von einer Bedienperson tragbare Bedieneinheit ausgebildet ist, welche zur manuellen und selektiven Aktivierung von Aus- und Einfahrbewegungen von zumindest zwei Hydraulikzylindern (5) eingerichtet ist.

## Claims (Claims for the following Contracting State(s): FR)

1. A deformation device (1) for the targeted deformation of vehicle body sections of motor vehicles, comprising
- a support structure (2) with a contact surface (3) for a motor vehicle to be deformed,
- a controllable force application device (4) relative to the motor vehicle to be deformed, which force application device (4) comprises at least one hydraulic cylinder (5) with at least one pressure surface (6) relative to the motor vehicle to be deformed, and
- a retaining means (7) for fixing the motor vehicle to be deformed relative to the contact surface (3),
- wherein the retaining means (7) comprises at least one abutment element (8) which is connected or can be connected to the support structure (2) in a load-transmitting manner,
- which at least one abutment element (8) has at least one support surface (10) relative to the motor vehicle to be deformed,
- and which at least one abutment element (8) can absorb deformation forces which can be applied by the force application device (4) without deformation,
**characterized in that**
an operating unit which can be carried by an operator is formed, which is set up for the manual and selective activation of extension and retraction movements of at least two hydraulic cylinders (5).

2. The deformation device according to claim 1, **characterized in that** the support structure (2) is configured as a cage structure (12), which cage structure (12) has a lower chord section (13) which absorbs shear forces and has an upper chord section (14) which is spaced apart from the lower chord section (13) in the vertical direction and absorbs shear forces.

3. The deformation device according to claim 1 or 2, **characterized in that** the at least one abutment element (8) comprises a support wall (9) and/or a plurality of support pillars (11).

4. The deformation device according to one of the preceding claims, **characterized in that** the retaining means (7) comprises a spacer body (15), which spacer body (15) can be inserted as required into a clear width (16) between the at least one pressing surface (6) of the at least one hydraulic cylinder (5) and the at least one abutment element (8).

5. The deformation device according to one of the preceding claims, **characterized in that** the contact surface (3) for a motor vehicle to be deformed has a slope (17, 17') in at least one direction relative to a horizontally aligned contact plane (18) of the deformation device (1).

6. The deformation device according to one of the preceding claims, **characterized in that** the contact surface (3) is configured as a collecting tray (19) and/or at least one trough (20, 20') is formed in the contact surface (3), so that catching and/or bundled collection of liquids escaping from a motor vehicle is made possible.

7. The deformation device according to claim 5 or 6, **characterized in that** a drainage opening (21) for liquids escaping from a motor vehicle is formed at the lowest point of the collecting tray (19) and/or the trough (20, 20') in terms of level.

8. The deformation device according to claim 7, **characterized in that** the drainage opening (21) is assigned a drain cock (22) or a plug which can be attached and removed as required.

9. The deformation device according to one of the preceding claims, **characterized in that** the contact surface (3) is configured to be impermeable to sweepings.

10. The deformation device according to one of the preceding claims, **characterized in that** the support structure (2) is configured as a detachable truck body (23) with a pull-up hook (24) and at least one set-down roller (25) or as a rope- or chain-coupled truck set-down body.

11. The deformation device according to one of the preceding claims, **characterized in that** the support structure (2) has a width (26), extending transversely to a longitudinal axis of the at least one hydraulic cylinder (5), of at most approximately 2550 mm.

12. The deformation device according to one of the preceding claims, **characterized in that** the support structure (2) has a length (27), extending parallel to a longitudinal axis of the at least one hydraulic cylinder (5), which is between 5000 mm and 9000 mm.

13. The deformation device according to one of claims 10-12, **characterized in that** the at least one abutment element (8) is formed at a front longitudinal end (28) of the support structure (2) with respect to the transport direction of the truck body (23) and the pull-up hook (24) is attached to the abutment element (8).

14. The deformation device according to one of claims 10-13, **characterized in that** a cylinder bottom (29) of the at least one hydraulic cylinder (5) is assigned closest to a longitudinal end (30) of the support structure (2) that is rearward with respect to the transport direction of the truck body (23).

15. The deformation device according to one of the preceding claims, **characterized in that** an access platform or a pair of access ramps (33, 34) spaced apart from one another in the longitudinal direction of the support structure (2) is arranged or can be arranged on at least one of the two longitudinal sides (31, 32) of the support structure (2) with respect to the contact surface (3).

16. The deformation device according to claim 15, **characterized in that** the access platform or the access ramps (33, 34) are detachably connected to the support structure (2) as required, in particular can be hooked in.

17. The deformation device according to claim 15 or 16, **characterized in that** the access platform or the access ramps (33, 34) are connected to the support structure (2) in an articulated manner, in particular are mounted so as to be pivotable up and down relative to the contact surface (3) about a pivot axis (36) extending parallel to the longitudinal direction of the support structure (2).

18. The deformation device according to one of claims 15-17, **characterized in that** the access platform or the access ramps (33, 34) form a contact or support area (37) for the wheels of a motor vehicle to be deformed which is extended in the width direction with respect to a width (26) of the contact surface (3) of the support structure (2).

19. The deformation device according to one of the preceding claims, **characterized in that** the support structure (2) has, on at least one of its longitudinal sides (31, 32), a loading section (38) whose clear width (39, 40) extending parallel and vertically to the longitudinal direction of the support structure (2) is dimensioned such that a motor vehicle to be deformed can be brought onto the contact surface (3) by means of a forklift truck, telescopic loader or load crane.

## Claims (Claims for the following Contracting State(s): AT, BE, CH, DE, DK, ES, GB, GR, IT, LI, LU, NL, SE, MC, PT, IE, SI, LT, LV, FI, RO, MK, CY, AL, TR, BG, CZ, EE, HU, PL, SK, HR ,IS, MT, NO, RS, SM)

1. A deformation device (1) for the targeted deformation of vehicle body sections of motor vehicles, comprising
- a support structure (2) with a contact surface (3) for a motor vehicle to be deformed,
- a controllable force application device (4) relative to the motor vehicle to be deformed, which force application device (4) comprises at least one hydraulic cylinder (5) with at least one pressure surface (6) relative to the motor vehicle to be deformed, and
- a retaining means (7) for fixing the motor vehicle to be deformed relative to the contact surface (3),
**characterized in that**
the retaining means (7) comprises at least one abutment element (8) which is connected or can be connected to the support structure (2) in a load-transmitting manner,
which at least one abutment element (8) has at least one support surface (10) relative to the motor vehicle to be deformed,
and which at least one abutment element (8) can absorb deformation forces which can be applied by the force application device (4) without deformation.

2. The deformation device according to claim 1, **characterized in that** the support structure (2) is configured as a cage structure (12), which cage structure (12) has a lower chord section (13) which absorbs shear forces and has an upper chord section (14) which is spaced apart from the lower chord section (13) in the vertical direction and absorbs shear forces.

3. The deformation device according to claim 1 or 2, **characterized in that** the at least one abutment element (8) comprises a support wall (9) and/or a plurality of support pillars (11).

4. The deformation device according to one of the preceding claims, **characterized in that** the retaining means (7) comprises a spacer body (15), which spacer body (15) can be inserted as required into a clear width (16) between the at least one pressing surface (6) of the at least one hydraulic cylinder (5) and the at least one abutment element (8).

5. The deformation device according to one of the preceding claims, **characterized in that** the contact surface (3) for a motor vehicle to be deformed has a slope (17, 17') in at least one direction relative to a horizontally aligned contact plane (18) of the deformation device (1).

6. The deformation device according to one of the preceding claims, **characterized in that** the contact surface (3) is configured as a collecting tray (19) and/or at least one trough (20, 20') is formed in the contact surface (3), so that catching and/or bundled collection of liquids escaping from a motor vehicle is made possible.

7. The deformation device according to claim 5 or 6, **characterized in that** a drainage opening (21) for liquids escaping from a motor vehicle is formed at the lowest point of the collecting tray (19) and/or the trough (20, 20') in terms of level.

8. The deformation device according to claim 7, **characterized in that** the drainage opening (21) is assigned a drain cock (22) or a plug which can be attached and removed as required.

9. The deformation device according to one of the preceding claims, **characterized in that** the contact surface (3) is configured to be impermeable to sweepings.

10. The deformation device according to one of the preceding claims, **characterized in that** the support structure (2) is configured as a detachable truck body (23) with a pull-up hook (24) and at least one set-down roller (25) or as a rope- or chain-coupled truck set-down body.

11. The deformation device according to one of the preceding claims, **characterized in that** the support structure (2) has a width (26), extending transversely to a longitudinal axis of the at least one hydraulic cylinder (5), of at most approximately 2550 mm.

12. The deformation device according to one of the preceding claims, **characterized in that** the support structure (2) has a length (27), extending parallel to a longitudinal axis of the at least one hydraulic cylinder (5), which is between 5000 mm and 9000 mm.

13. The deformation device according to one of claims 10-12, **characterized in that** the at least one abutment element (8) is formed at a front longitudinal end (28) of the support structure (2) with respect to the transport direction of the truck body (23) and the pull-up hook (24) is attached to the abutment element (8).

14. The deformation device according to one of claims 10-13, **characterized in that** a cylinder bottom (29) of the at least one hydraulic cylinder (5) is assigned closest to a longitudinal end (30) of the support structure (2) that is rearward with respect to the transport direction of the truck body (23).

15. The deformation device according to one of the preceding claims, **characterized in that** an access platform or a pair of access ramps (33, 34) spaced apart from one another in the longitudinal direction of the support structure (2) is arranged or can be arranged on at least one of the two longitudinal sides (31, 32) of the support structure (2) with respect to the contact surface (3).

16. The deformation device according to claim 15, **characterized in that** the access platform or the access ramps (33, 34) are detachably connected to the support structure (2) as required, in particular can be hooked in.

17. The deformation device according to claim 15 or 16, **characterized in that** the access platform or the access ramps (33, 34) are connected to the support structure (2) in an articulated manner, in particular are mounted so as to be pivotable up and down relative to the contact surface (3) about a pivot axis (36) extending parallel to the longitudinal direction of the support structure (2).

18. The deformation device according to one of claims 15-17, **characterized in that** the access platform or the access ramps (33, 34) form a contact or support area (37) for the wheels of a motor vehicle to be deformed which is extended in the width direction with respect to a width (26) of the contact surface (3) of the support structure (2).

19. The deformation device according to one of the preceding claims, **characterized in that** the support structure (2) has, on at least one of its longitudinal sides (31, 32), a loading section (38) whose clear width (39, 40) extending parallel and vertically to the longitudinal direction of the support structure (2) is dimensioned such that a motor vehicle to be deformed can be brought onto the contact surface (3) by means of a forklift truck, telescopic loader or load crane.

20. The deformation device according to one of the preceding claims, **characterized in that** an operating unit which can be carried by an operator is formed, which is set up for the manual and selective activation of extension and retraction movements of at least two hydraulic cylinders (5).

## Revendications (Revendications pour l'(les) Etat(s) contractant(s) suivant(s): FR)

1. Dispositif de déformation (1) pour la déformation ciblée de parties de carrosseries de véhicules automobiles, comprenant
- une structure porteuse (2) avec une surface d'installation (3) pour un véhicule automobile à déformer,
- un dispositif d'application de forces (4) contrôlable en face du véhicule automobile à déformer, ce dispositif d'application de forces (4) comprenant au moins un vérin hydraulique (5) avec au moins une surface de pression (6) face au véhicule automobile à déformer et
- un moyen de maintien (7) pour l'immobilisation du véhicule automobile à déformer par rapport à la surface d'installation (3),
- dans lequel le moyen de maintien (7) comprend au moins un élément de contre-palier (8) qui est relié ou peut être relié avec la structure porteuse (2) de façon à transmettre les charges,
- cet au moins un élément de contre-palier (8) comprenant au moins une surface d'appui (10) face au véhicule automobile à déformer,
- et cet au moins un élément de contre-palier (8) pouvant absorber, sans déformation, les forces de déformation pouvant être appliquées par le dispositif d'application de forces (4),
**caractérisé en ce que**
une unité de commande pouvant être portée par un opérateur, qui est conçue pour l'activation manuelle et sélective de mouvements de sortie et de rentrée d'au moins deux vérins hydrauliques (5).

2. Dispositif de déformation selon la revendication 1, **caractérisé en ce que** la structure porteuse (2) est conçue comme une structure en forme de cage (12), cette structure en forme de cage (12) comprenant une partie de membrure inférieure (13) absorbant les forces de poussées et comprenant une partie de membrure supérieure (14) absorbant les forces de poussées, distante dans la direction verticale par rapport à la partie de membrure inférieure (13).

3. Dispositif de déformation selon la revendication 1 ou 2, **caractérisé en ce que** l'au moins un élément de contre-palier (8) comprend une paroi d'appui (9) et/ou plusieurs piliers d'appui (11).

4. Dispositif de déformation selon l'une des revendications précédentes, **caractérisé en ce que** le moyen de maintien (7) comprend un élément d'écartement (15) cet élément d'écartement (15) pouvant être inséré, si nécessaire, dans une largeur intérieure (16) entre l'au moins une surface de pression (6) de l'au moins un vérin hydraulique (5) et l'au moins un élément de contre-palier (8).

5. Dispositif de déformation selon l'une des revendications précédentes, **caractérisé en ce que** la surface d'installation (3) pour un véhicule automobile à déformer présente, au moins dans une direction, une pente (17, 17') par rapport à un plan d'installation (18), orienté horizontalement, du dispositif de déformation (1).

6. Dispositif de déformation selon l'une des revendications précédentes, **caractérisé en ce que** la surface d'installation (3) est conçue comme un bac de collecte (19) et/ou, dans la surface d'installation (3), est réalisée au moins une goulotte (20, 20'), de façon à permettre une capture et/ou une collecte des liquides sortant d'un véhicule automobile.

7. Dispositif de déformation selon la revendication 5 ou 6, **caractérisé en ce que**, au point le bas du bac de collecte (19) et/ou de la goulotte (20, 20') est réalisée une ouverture d'évacuation (21) pour les liquides sortant d'un véhicule automobile.

8. Dispositif de déformation selon la revendication 7, **caractérisé en ce que**, à l'ouverture d'évacuation (21) correspond un robinet d'évacuation (22) ou un bouchon pouvant être placé ou retiré si nécessaire.

9. Dispositif de déformation selon l'une des revendications précédentes, **caractérisé en ce que** la surface d'installation (3) est réalisée de façon étanche aux salissures.

10. Dispositif de déformation selon l'une des revendications précédentes, **caractérisé en ce que** la structure porteuse (2) est conçue comme une structure de camion (23) avec un crochet de levage (24) et au moins un rouleau de dépôt (25) ou comme une structure de dépôt de camion pouvant être couplée à l'aide d'un câble ou d'une chaîne.

11. Dispositif de déformation selon l'une des revendications précédentes, **caractérisé en ce que** la structure porteuse (2) présente une largeur (26) s'étendant transversalement par rapport à un axe longitudinal de l'au moins un vérin hydraulique (5) d'environ 2550 mm maximum.

12. Dispositif de déformation selon l'une des revendications précédentes, **caractérisé en ce que** la structure porteuse (2) présente une longueur (27) s'étendant parallèlement à un axe longitudinal de l'au moins un vérin hydraulique (5) qui est entre 5 000 mm et 9 000 mm.

13. Dispositif de déformation selon l'une des revendications 10 à 12, **caractérisé en ce que** l'au moins un élément de contre-palier (8) est réalisée au niveau d'une extrémité longitudinale (28) de la structure porteuse (2), à l'avant par rapport à la direction de transport de la structure de camion (23) et le crochet de levage (24) est fixé à l'élément de contre-palier (8).

14. Dispositif de déformation selon l'une des revendications 10 à 13, **caractérisé en ce qu'**un fond de vérin (29) de l'au moins un vérin hydraulique (5) correspond à une extrémité longitudinale (30) la plus proche de la structure porteuse (2), à l'arrière par rapport à la direction de transport de la structure de camion (23).

15. Dispositif de déformation selon l'une des revendications précédentes, **caractérisé en ce que**, sur au moins un des de deux côtés longitudinaux (31, 32) de la structure porteuse (2), est disposée ou peut être disposée une plate-forme de levage ou une paire de rampe de levage (33, 34) distantes entre elles dans la direction longitudinale de la structure porteuse (2), par rapport à la surface d'installation (3).

16. Dispositif de déformation selon la revendication 15, **caractérisé en ce que** la plate-forme de levage ou les rampes de levage (33, 34) sont reliées de manière amovible, plus particulièrement peuvent être accrochées si nécessaire à la structure porteuse (2).

17. Dispositif de déformation selon la revendication 15 ou 16, **caractérisé en ce que** la plate-forme de levage ou les rampes de levage (33, 34) sont reliées de manière articulée avec la structure porteuse (2), plus particulièrement sont logées de manière à pouvoir être déployées et rabattues par rapport à la surface d'installation (3) autour d'un axe de pivotement (36) s'étendant parallèlement à la direction longitudinale de la structure porteuse (2).

18. Dispositif de déformation selon l'une des revendications 15 à 17, **caractérisé en ce que** la plate-forme de levage ou les rampes de levage (33, 34) forment une zone d'installation ou d'appui (37) pour les roues d'un véhicule automobile à déformer, rallongée par rapport à une largeur (26) de la surface d'installation (3) de la structure porteuse (2) dans direction de la largeur.

19. Dispositif de déformation selon l'une des revendications précédentes, **caractérisé en ce que** la structure porteuse (2) comprend, sur au moins un de ses côtés longitudinaux (31, 32), une partie d'alimentation (38) dont la largeur intérieure (39, 40), s'étendant parallèlement et verticalement par rapport à la direction longitudinale de la structure porteuse (2), est dimensionnée de sorte qu'un véhicule automobile à déformer peut être amené sur la surface d'installation (3) au moyen d'un chariot élévateur, d'un chariot télescopique ou d'une grue.

## Revendications (Revendications pour l'(les) Etat(s) contractant(s) suivant(s): AT, BE, CH, DE, DK, ES, GB, GR, IT, LI, LU, NL, SE, MC, PT, IE, SI, LT, LV, FI, RO, MK, CY, AL, TR, BG, CZ, EE, HU, PL, SK, HR ,IS, MT, NO, RS, SM)

1. Dispositif de déformation (1) pour la déformation ciblée de parties de carrosseries de véhicules automobiles, comprenant
- une structure porteuse (2) avec une surface d'installation (3) pour un véhicule automobile à déformer,
- un dispositif d'application de forces (4) contrôlable en face du véhicule automobile à déformer, ce dispositif d'application de forces (4) comprenant au moins un vérin hydraulique (5) avec au moins une surface de pression (6) face au véhicule automobile à déformer et
- un moyen de maintien (7) pour l'immobilisation du véhicule automobile à déformer par rapport à la surface d'installation (3),
**caractérisé en ce que**
le moyen de maintien (7) comprend au moins un élément de contre-palier (8) qui est relié ou peut être relié avec la structure porteuse (2) de façon à transmettre les charges, cet au moins un élément de contre-palier (8) comprend au moins une surface d'appui (10) face au véhicule automobile à déformer,
et cet au moins un élément de contre-palier (8) peut absorber, sans déformation, les forces de déformation pouvant être appliquées par le dispositif d'application de forces (4).

2. Dispositif de déformation selon la revendication 1, **caractérisé en ce que** la structure porteuse (2) est conçue comme une structure en forme de cage (12), cette structure en forme de cage (12) comprenant une partie de membrure inférieure (13) absorbant les forces de poussées et comprenant une partie de membrure supérieure (14) absorbant les forces de poussées, distante dans la direction verticale par rapport à la partie de membrure inférieure (13).

3. Dispositif de déformation selon la revendication 1 ou 2, **caractérisé en ce que** l'au moins un élément de contre-palier (8) comprend une paroi d'appui (9) et/ou plusieurs piliers d'appui (11).

4. Dispositif de déformation selon l'une des revendications précédentes, **caractérisé en ce que** le moyen de maintien (7) comprend un élément d'écartement (15) cet élément d'écartement (15) pouvant être inséré, si nécessaire, dans une largeur intérieure (16) entre l'au moins une surface de pression (6) de l'au moins un vérin hydraulique (5) et l'au moins un élément de contre-palier (8).

5. Dispositif de déformation selon l'une des revendications précédentes, **caractérisé en ce que** la surface d'installation (3) pour un véhicule automobile à déformer présente, au moins dans une direction, une pente (17, 17') par rapport à un plan d'installation (18), orienté horizontalement, du dispositif de déformation (1).

6. Dispositif de déformation selon l'une des revendications précédentes, **caractérisé en ce que** la surface d'installation (3) est conçue comme un bac de collecte (19) et/ou, dans la surface d'installation (3), est réalisée au moins une goulotte (20, 20'), de façon à permettre une capture et/ou une collecte des liquides sortant d'un véhicule automobile.

7. Dispositif de déformation selon la revendication 5 ou 6, **caractérisé en ce que**, au point le bas du bac de collecte (19) et/ou de la goulotte (20, 20') est réalisée une ouverture d'évacuation (21) pour les liquides sortant d'un véhicule automobile.

8. Dispositif de déformation selon la revendication 7, **caractérisé en ce que**, à l'ouverture d'évacuation (21) correspond un robinet d'évacuation (22) ou un bouchon pouvant être placé ou retiré si nécessaire.

9. Dispositif de déformation selon l'une des revendications précédentes, **caractérisé en ce que** la surface d'installation (3) est réalisée de façon étanche aux salissures.

10. Dispositif de déformation selon l'une des revendications précédentes, **caractérisé en ce que** la structure porteuse (2) est conçue comme une structure de camion (23) avec un crochet de levage (24) et au moins un rouleau de dépôt (25) ou comme une structure de dépôt de camion pouvant être couplée à l'aide d'un câble ou d'une chaîne.

11. Dispositif de déformation selon l'une des revendications précédentes, **caractérisé en ce que** la structure porteuse (2) présente une largeur (26) s'étendant transversalement par rapport à un axe longitudinal de l'au moins un vérin hydraulique (5) d'environ 2 550 mm maximum.

12. Dispositif de déformation selon l'une des revendications précédentes, **caractérisé en ce que** la structure porteuse (2) présente une longueur (27) s'étendant parallèlement à un axe longitudinal de l'au moins un vérin hydraulique (5) qui est entre 5 000 mm et 9 000 mm.

13. Dispositif de déformation selon l'une des revendications 10 à 12, **caractérisé en ce que** l'au moins un élément de contre-palier (8) est réalisé au niveau d'une extrémité longitudinale (28) de la structure porteuse (2), à l'avant par rapport à la direction de transport de la structure de camion (23) et le crochet de levage (24) est fixé à l'élément de contre-palier (8).

14. Dispositif de déformation selon l'une des revendications 10 à 13, **caractérisé en ce qu'**un fond de vérin (29) de l'au moins un vérin hydraulique (5) correspond à une extrémité longitudinale (30) la plus proche de la structure porteuse (2), à l'arrière par rapport à la direction de transport de la structure de camion (23).

15. Dispositif de déformation selon l'une des revendications précédentes, **caractérisé en ce que**, sur au moins un des de deux côtés longitudinaux (31, 32) de la structure porteuse (2), est disposée ou peut être disposée une plate-forme de levage ou une paire de rampe de levage (33, 34) distantes entre elles dans la direction longitudinale de la structure porteuse (2), par rapport à la surface d'installation (3).

16. Dispositif de déformation selon la revendication 15, **caractérisé en ce que** la plate-forme de levage ou les rampes de levage (33, 34) sont reliées de manière amovible, plus particulièrement peuvent être accrochées si nécessaire à la structure porteuse (2).

17. Dispositif de déformation selon la revendication 15 ou 16, **caractérisé en ce que** la plate-forme de levage ou les rampes de levage (33, 34) sont reliées de manière articulée avec la structure porteuse (2), plus particulièrement sont logées de manière à pouvoir être déployées et rabattues par rapport à la surface d'installation (3) autour d'un axe de pivotement (36) s'étendant parallèlement à la direction longitudinale de la structure porteuse (2).

18. Dispositif de déformation selon l'une des revendications 15 à 17, **caractérisé en ce que** la plate-forme de levage ou les rampes de levage (33, 34) forment une zone d'installation ou d'appui (37) pour les roues d'un véhicule automobile à déformer, rallongée par rapport à une largeur (26) de la surface d'installation (3) de la structure porteuse (2) dans direction de la largeur.

19. Dispositif de déformation selon l'une des revendications précédentes, **caractérisé en ce que** la structure porteuse (2) comprend, sur au moins un de ses côtés longitudinaux (31, 32), une partie d'alimentation (38) dont la largeur intérieure (39, 40), s'étendant parallèlement et verticalement par rapport à la direction longitudinale de la structure porteuse (2), est dimensionnée de sorte qu'un véhicule automobile à déformer peut être amené sur la surface d'installation (3) au moyen d'un chariot élévateur, d'un chariot télescopique ou d'une grue.

20. Dispositif de déformation selon l'une des revendications précédentes, **caractérisé en ce qu'**une unité de commande pouvant être portée par un opérateur est prévue, qui est conçue pour l'activation manuelle et sélective de mouvements de sortie et de rentrée d'au moins deux vérins hydrauliques (5).
